# EUROPEAN PATENT APPLICATION

(11) **EP 3 209 007 A1**
(43) Date of publication of application: **23.08.2017**
(21) Application number: 16155824.2
(22) Date of filing: 16.02.2016
(51) Int. Cl.: H04N 1/00

(54) **AN IMAGE SCANNER AND A COMPONENT FEEDER COMPRISING AN IMAGE SCANNER**

(71) Applicant: ABB Schweiz AG, 5400 Baden (CH)
(72) Inventor: SIRKETT, Daniel, 722 10 Västerås (SE)
(74) Representative: Savela, Reino Aleksi

(57) **Abstract**

An image scanner (1) comprising a transparent support bed (3) for supporting an object to be scanned and a scanning device (5) arranged underneath the support bed, which scanning device comprises a movable element (7) configured to receive light and to transmit the light to an image sensor, and said image scanner comprising an image background device (15) that is arranged above the support bed (3) and arranged to provide an image background for the object during scanning, wherein the image background device (15) is arranged to perform a movement in coordination with a movement of the movable element (7). Also disclosed is a component feeder (30) comprising an image scanner (1).

## Description

### Technical field of the invention

The present invention relates to an image scanner comprising a transparent support bed for supporting an object to be scanned and a scanning device arranged underneath the support bed, which scanning device comprises a movable element. The present invention further relates to a component feeder comprising a transparent presentation surface upon which components are presented in order to be pickable by a tool, and comprising an image scanner.

In particular the present invention relates to an application for scanning 3D (3-dimensional) objects of which 2D (2-dimensional) images are produced.

### Background

It is conventionally known to use a flatbed scanner without a lid to produce images or reproductions of 3D (3-dimensional) objects. The object is placed on the surface of the scanner. The scanner comprises a light source from which a light is directed onto the object from underneath and light reflected off the object is appropriately channelled into the image sensor of the scanner, in order to produce an image of the object.

When objects are scanned in low ambient light conditions, the background in the image appears dark. This presents a problem when it is necessary to make an image of a dark-coloured 3D object as the image of the object will have poor contrast against the background. Different ways of solving this problem has been proposed in prior art.

In US 5898508 is disclosed a luminescent box that is placed on top of a flatbed scanner. In one embodiment, the box is configured as a lid that is pivoted directly on the frame of the scanner and which encloses the object to be scanned. In another embodiment the box has side walls and a lid. The luminescent box can have a light reflecting interior and it is also mentioned that a light source may be installed inside the box.

In WO 2009120216 is disclosed a so called light box that is mounted over the surface of a flatbed scanner. The light box is an open structure and comprises an illumination assembly mounted on four legs. This illumination assembly is positioned above the scanning surface of the scanner onto which the object to be scanned should be placed. The illumination assembly comprises a plurality of fluorescent lights or other light producing sources.

### Summary of the invention

In automated industrial systems, such as production lines where industrial robots are used, components stored in a disordered bulk storage are required to be fed as individual components, correctly oriented, in order for various operations to be performed. One type of feeder is the type in which randomly oriented components are fed onto and displayed on a presentation surface. Some type of imaging system is typically used in order to determine which components on the presentation surface that are correctly oriented in order to be pickable by for example a robot tool. By a pickable parts is for example meant a part that has the correct orientation and which can therefore be picked. These types of feeders are flexible since they are not limited to a certain type of component, and are therefore often referred to as flexible parts feeders or flex feeders.

The imaging system of such a feeder may be installed overhead or underneath the presentation surface. When the imaging system is installed underneath, the presentation surface is transparent. The invention is based on the realization that an imaging system installed underneath the presentation surface may comprise a flatbed scanner, such as a CIS scanner (contact image sensor scanner) or a CCD scanner (charge coupled device scanner), that will scan objects lying above the scanner, on the presentation surface. In such an application, the above described general problem related to the image background may occur. However, the types of boxes described in the above mentioned documents cannot be used in a robot application since the area above the scanner surface/presentation surface must be accessible for the robot tool in order to pick up components lying on the surface.

A general object of the invention is to provide an improved image scanner of the flatbed type that is capable of producing good quality images of 3D objects, including dark objects, and which is more flexible and less space demanding than previously known scanners.

A further object of the invention is to provide an improved image scanner of the flatbed type that is particularly suitable for use with component feeders in industrial robot applications.

These objects are achieved by the image scanner and the component feeder as defined in the appended independent claims.

From the point of view of a general application, the invention is based on the realization that it is only the background immediately behind the object, and which is within the field of view of the image sensor of the scanner during scanning, that is of importance. This general concept will also make the invention suitable for use in the particular application of a component feeder.

According to a first aspect of the invention is defined an image scanner comprising a transparent support bed for supporting an object to be scanned and a scanning device arranged underneath the support bed, which scanning device comprises a movable element comprising a light receiving member configured to receive light and to transmit the light to an image sensor, and said image scanner comprising an image background device that is arranged above the support bed and arranged to provide an image background for the object during scanning, wherein the image background device is arranged to perform a movement in coordination with a movement of the movable element. By arranging a background image device above the support bed and making it move in coordination with the movement of the movable element, it will be possible to have a background device that has a rather small width. In principle it will be sufficient if the width of the image background device, i.e. the width of the device in the direction of movement, is only large enough to provide the background in the image that is obtained by the image sensor of the scanning device, and is thus related to the field of view of the scanning device. If e.g. the scanning device comprises a CIS, this has a very narrow field of view and the image background device can be made correspondingly narrow. Thus the zone above the support bed is not blocked by a lid or similar large overhead arrangement as in prior art, but instead it is accessible to a great extent. This offers a great advantage, e.g. in an application in a component feeder that is used for presenting objects to be pickable by a robot tool, as described above. Generally, if the scanning device comprises a CIS scanner, the movable element will comprise a light receiving member comprising a rod lens, and an image sensor comprising photo sensors. If the scanning device comprises a CCD scanner, the movable element comprises a light receiving member in the form of a movable mirror arrangement that transmits the light to an image sensor comprising a line-scan camera.

In line with the above, the image background device is advantageously movable in alignment with the movable element. This will contribute to making it possible to have a background device with a rather small width. To be more precise, it is an advantage if the image background device is aligned with the movable element during coordinated movement of the image background device and the movable element.

According to one feature, the image background device is mechanically connected to the movable element. This is a simple way of achieving the coordinated movement of the image background device and the movable element of the scanning device. This may be achieved by any known type of mechanical connection arrangement. One example is a magnetic coupling.

According to another feature, the image background device may be mechanically disconnectable from the movable element. In this way, it can be disconnected if there is no need for a special image background device. It can even be removed if not needed.

According to another feature, the image background device may be arranged to control the brightness of the image background. This can be achieved in several different ways and by different means, of which examples will be given below. The advantage is that the background and the brightness of the background can be varied and changed depending on the object to be scanned and the general light conditions of the environment in which the image scanning takes place.

According to yet another feature, the image background device may comprise an exchangeable background element. This provides for one way of varying the image background and makes it possible to vary the image background brightness by using different background elements. For a dark object a background element that reflects the light from the scanning device can be used, and for a bright object a background element comprising a dark surface may be used.

Generally, the image background device may comprise a light reflecting element. The light reflecting element can e.g. be provided as a surface coating of a light reflective substance. This surface coating can be provided either on the above mentioned exchangeable background element, or directly on the surface of the background device. In another variant, the light reflecting element may comprise a mirror. Alternatively, or in addition, the image background device may comprise at least one light emitting element that directs light towards the moveable element of the scanning device. In addition to providing additional light to the background, this may be used instead of the light sources of the image sensor of the scanning device that are normally used.

Further, the image background device may be configured to block ingress of ambient light into the moveable element. This will provide for better control of the light conditions of the background, since ambient light often varies.

The image background device may comprise a first part extending transversely to and essentially parallel to the support bed, which first part comprises a background forming surface facing the movable element, and a second part that mechanically connects the first part with the movable element. The background forming surface may or may not be part of an exchangeable background element that has been previously described. Both parts preferably have a longitudinal shape. The image background device can e.g. have a general L-shape with one leg of the L comprising said first part and the other leg of the L comprising said second part by means of which it is connected to the movable element.

According to another feature, the image background device may be mechanically connected to the movable element and the image background device may be configured to be mechanically disconnected from the movable element if the scanning device, during movement, encounters a physical obstacle. In this way at least damage to the scanning device underneath the support bed may be avoided, if the movable element hits an obstacle. As mentioned before, the connection may be achieved by any known type of mechanical coupling, e.g. a magnetic coupling.

According to yet another feature, the image scanner may comprise a sensor that detects mechanical disconnection of the image background device and which sensor may be arranged to send a signal to the scanning device when disconnection has occurred, which signal indicates that the image is void. For this purpose a Hall sensor may be used to detect the disconnection and then communicate to the image decoder of the image scanner to delete the present image and initiate a new scan. Further, the image background device may be configured to be mechanically reconnectable to the movable element, after having been disconnected. It may also comprise a sensor that detects reconnection of the image background device and which sensor is arranged to send a signal to the scanning device when reconnection has occurred, which signal indicates that the next image is to be accepted. A Hall sensor may also be used to detect reconnection of the image background device and send a signal to the image scanner when reconnection has occurred.

According to one embodiment, the image scanner may be a contact image sensor (CIS) scanner. Such a scanner provides high quality 2D images of 3D objects.

According to another aspect of the present invention is defined a component feeder comprising a transparent presentation surface upon which components are presented in order to be pickable by a tool, and comprising an image scanner according to any one of the claims defining an image scanner, wherein the presentation surface comprises said support bed. As described above, component feeders are often used in robot applications in which an image of the component/object lying on the presentation surface is used to provide the robot with information about e.g. the orientation of the object. This information is used to control the robot tool to pick only objects that are correctly oriented or to direct the robot tool to orient itself in a position that makes the object pickable. When an image scanner is used in combination with a component feeder in order to scan components/objects lying on the presentation surface of the component feeder, the presentation surface must also be accessible to a robot tool. This is possible with the present invention since the image background device can be made rather small due to it being movable in coordination with the movable element of the scanning device and which movable element is configured to receive light and to transmit the light to an image sensor. The light may be light that is reflected off the object or it may be light that results from the object being backlit.

### Brief description of the drawings

The invention will now be described in more detail, with reference being made to the enclosed schematic drawings illustrating different aspects and embodiments of the invention, given as examples only, and in which:
Fig. 1 shows an embodiment of an image scanner according to the invention,
Fig. 2 is a schematic partial illustration of an embodiment of an image scanner according to the invention,
Fig. 3 is a schematic illustration of a detail of an embodiment of an image scanner according to the invention,
Figs. 4a-4c are schematic illustrations of an embodiment of an image scanner according to the invention, and
Fig. 5 is a schematic illustration of an embodiment of a component feeder according to the present invention.

Elements that are the same or represent corresponding or equivalent elements have been given the same reference numbers in the different figures.

### Description of preferred embodiments

An embodiment of an image scanner according to the present disclosure will now be described. In the example of the embodiment, the image scanner is basically a flatbed scanner of the CIS type. However, the invention may also be applied to other types of image scanners, such as a CCS type of scanner.

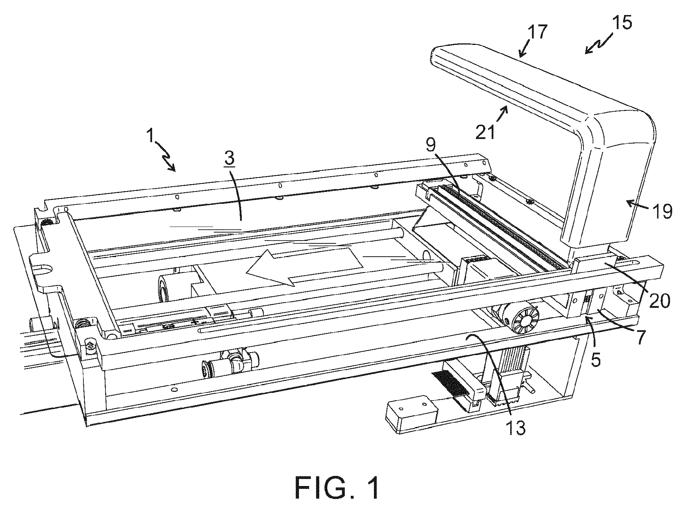

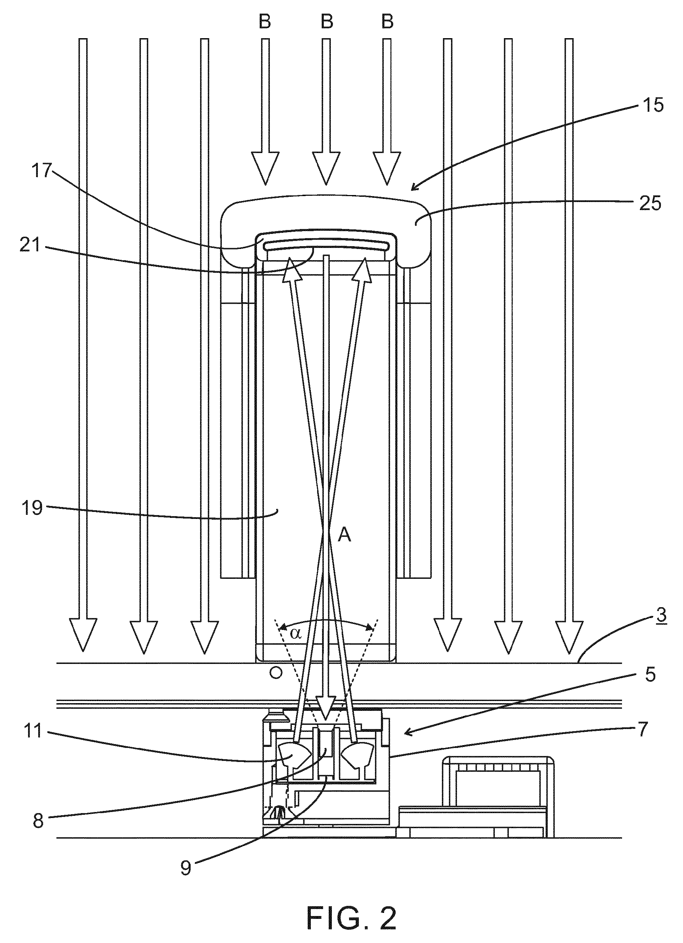

The embodiment of an image scanner 1 as shown in Fig. 1 comprises a transparent support bed 3 for supporting an object to be scanned. The object would be placed on the support bed in order to be scanned. The object may be a 3D object. Further, the image scanner comprises a scanning device 5 which comprises a movable element 7 configured to receive light and to transmit the light to an image sensor. As mentioned before, the light may e.g. be light that is reflected off the object or it may be light that results from the object being backlit. The scanning device is arranged underneath the transparent support bed 3. In the illustrated example of Fig. 1, the movable element comprises the movable contact image sensor (CIS) module 7 comprising a light receiving member 8 in the form of a rod lens array for receiving incoming light, and a row of photo sensors, such as photodiodes, forming the image sensor 9, see Fig. 2. The CIS module with the row of photo sensors has a longitudinal shape and extends over the entire width of the support bed. The image scanner further comprises guide members 13 arranged in alignment with the lower longitudinal side edges of the support bed 3 for guiding the movable CIS module 7 during its movement from one end of the support bed to the other end. During scanning, the movable CIS module 7 moves immediately underneath the transparent support bed 3, from one end of the support bed to the other end of the support bed while performing a scanning operation, and then the movable CIS module 7 returns back to its original position at the first end of the support bed. In the alternative case of a CCD scanning device, the movable element would comprise a light receiving member in the form of a movable mirror arrangement that transmits light to an image sensor comprising a fixed line-scan camera. Generally, the image scanner would also comprise some kind of actuator arrangement for performing the movement of the movable element 7, but this is not shown in the figures. The image scanner further comprises image processing components, but they are also not illustrated since they are not part of the inventive concept.

The embodiment of an image scanner 1, as shown in Fig. 1, further comprises an image background device 15 that is arranged above the support bed 3. It should be arranged sufficiently high above the support bed so as not to risk getting into contact with any object lying on the support bed. The image background device 15 is movable and arranged to provide an image background for the object during the scanning operation. In order to achieve this, it is arranged to perform a movement in coordination with the movement of the movable element of the scanning device 5, i.e. in coordination with the movement of the movable CIS module 7 in the shown embodiment. To this end, the image background device 15 is mechanically connected to the movable element of the scanning device 5, i.e. to the movable CIS module 7 in the shown embodiment.

With reference to Figs. 1, 2 and 3, the image background device 15 comprises a first part 17 extending above the support bed 3 and essentially parallel and transverse thereto, and a second part 19 that mechanically connects the first part 17 with the movable element 7.

The second part 19 can be connected to the movable element 7 by any suitable type of mechanical connection arrangement 20, e.g. a magnetic coupling. Preferably, the mechanical connection arrangement is of a type that allows for the image background device 15 to be disconnected from the movable element.

The first part 17 comprises a background forming surface 21 facing down towards the movable element 7. The background forming surface can be configured as an interior side of the first part 17, or it can be configured as part of a background element 23 that is carried by the first part. Such a background element is preferably exchangeable in order to make it possible to provide different kinds of background surfaces. The function of the movable image background device 15 with the background surface 21 is to provide a background, or backdrop, in the scanned image of the object. For example, the image background device 15 may comprise a light reflecting element. The light reflecting element may comprise the background surface being made light reflecting, e.g. in the form of a light reflecting coating, or it may comprise a mirror. Alternatively, the light reflecting element may be part of the exchangeable background element 23. As shown in Fig. 2 by the arrows A, light emitted from the illuminators 11, which are part of the movable CIS module, will be reflected by the background surface 21 and back to the image sensors 9 below. Since the movable background device travels together with the movable CIS module, the background of the object positioned on the support bed 3 will be lit up from below by the illuminators 11 when a scanning takes place. At the same time the light from the illuminators 11 will be reflected by the background surface 21 and thus illuminate the background of an object lying on the support bed 3. The background surface 21 may be somewhat curved in order to focus the reflected light into a narrow strip that corresponds to the position of the image sensors 9 of the movable CIS module 7 below.

As shown in Fig. 1, the image background device 15 is arranged and configured to be aligned with the movable element, i.e. the CIS module, during the coordinated movement of the movable element and the image background device. Thus the first part 17 comprising the background forming surface 21 is configured to have a longitudinal shape and to extend over the entire width of the support bed. In the illustrated embodiment the image background device is configured as an L-shaped bracket.

Generally, the width of the background forming surface 21 of the image background device 15 is no more than what is required, with consideration taken to the field of view α of the CIS module and the sensitivity of the image sensor, in order to produce a sufficiently bright background, and taking into consideration the distance between the CIS module and background forming surface in each particular set up. Generally, the width could be set to a value corresponding to at least half of the field of view for the CIS module, and preferably between 40% and 100% of the field of view α. The width of the image background device is preferably essentially the same, or at least only slightly larger.

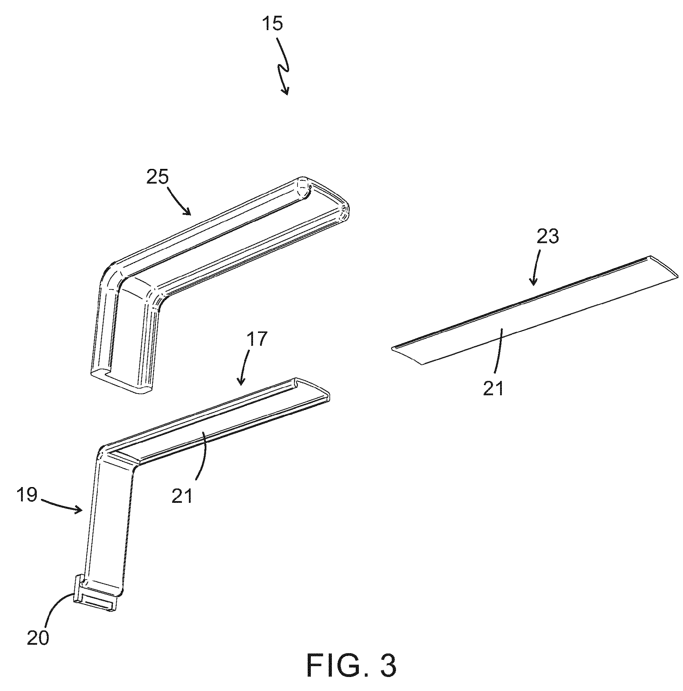

As mentioned, the background forming surface 21 may be part of an exchangeable background element 23, as shown in Fig. 3. If for example a dark background is required, a background element having a dark background forming surface may be used, and if a light background is required, then an element with a reflecting background forming surface is used. It is also conceivable to provide the image background device 15 with one or more light emitting elements, which for example can be used if the CIS module illuminators 11 are switched off. Such light emitting elements may e.g. be configured as a lighting strip similar to a CIS lighting strip.

Further, the first part 17 of image background device can also function to block out a large proportion of the ambient light in the described embodiment. This is illustrated by the arrows B in Fig. 2, illustrating external light coming from above.

Overall, the image background device 15 makes it possible to vary and control the brightness of the background when scanning 3D objects.

As an optional feature, the image background device may be provided with an external protective padding 25.

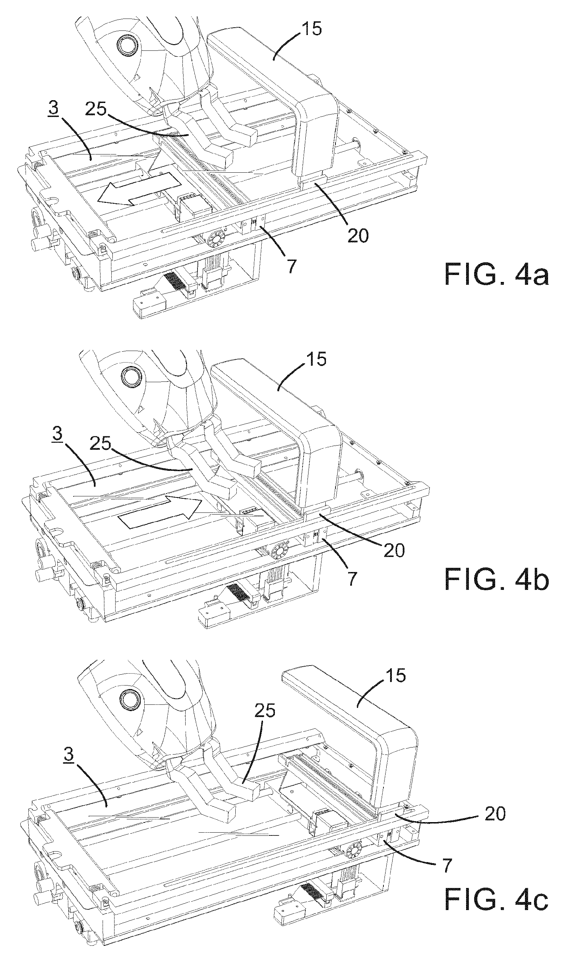

In Figs. 4a-4c is illustrated some optional further features of the image scanner according to an embodiment of the present invention. These features are described in connection with use of the image scanner 1 in a robot application. However, it should be stressed that the particular use does not imply any limitation in relation to the features that will be described. These features can be used in any suitable context. As mentioned before, the image background device 15 is mechanically connected to the movable element 7, which is a CIS module in the illustrated example. In the starting position for scanning, the movable element 7 of the scanning device 5 and the image background device 15 will have the positions as shown in Fig. 1. When the scanning starts, they will both move in the direction of the arrow, since they are mechanically connected. In Figs. 4a-4c, a robot arm provided with a gripper tool 25 is present close to the support bed 3 and presents a physical obstacle to the image background device 15. However, the mechanical connection arrangement 20 that connects the image background device to the CIS module 7 is of a type that allows for the image background device 15 to be mechanically disconnected from the CIS module. When the image background device 15 hits the gripper 25, the image background device will be disconnected from the CIS module 7, and the CIS module will continue its movement alone towards the end of the support bed 3, as can be seen in Fig. 4a and as indicated by the arrow. When the CIS module has reached the end of the support bed 3, and the scanning operation is finished, it will reverse its movement and start moving in the reverse direction towards the starting end of the support bed 3. The connection arrangement may then be configured such that the image background device can be reconnected to the movable element, i.e. the CIS module, when the CIS module has travelled as far as to the location of the disconnected image background device 15. This is illustrated in Fig. 4b. Once they are reconnected, they will move together to the starting end of the support bed 3, as shown in Fig. 4c.

As mentioned before, the connection arrangement may for example comprise a magnetic coupling. The image scanner may optionally also comprise a sensor that detects the mechanical disconnection of the image background device, and which can be arranged to send a signal to the scanning device when disconnection has occurred. Such a signal may be used to indicate that the image is void. For this purpose a Hall sensor may be used to detect the disconnection and then communicate to the image decoder of the image scanner to delete the present image and initiate a new scan. The sensor may also be used to detect reconnection of the image background device and send a signal to the image scanner when reconnection has occurred.

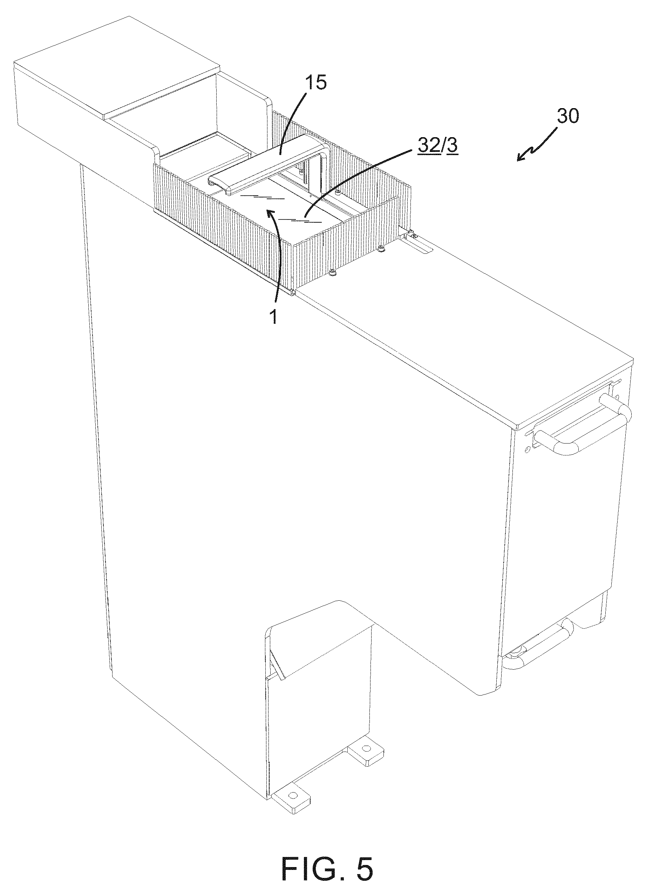

In Fig. 5 is schematically illustrated a component feeder 30 according to another aspect of the present invention. The component feeder 30 comprises a transparent presentation surface 32 upon which components can be distributed in order to be pickable by a tool, such as a robot gripper. The component feeder comprises an image scanner 1 according to the present invention and as described above, wherein the presentation surface 32 comprises said support bed 3. The scanning device is consequently arranged underneath the presentation surface. The only clearly visible part of the image scanner in the figure is the image background device 15 and the support bed 3.

The invention is not limited to the embodiments shown above, but the person skilled in the art may modify them in a plurality of ways within the scope of the invention as defined by the claims. Thus, the invention is not limited to a CIS scanner, but may also be applied to, for example, a CCD scanner. Further, it is not limited to any particular application such as in a component feeder, but may be used in any application.

## Claims

1. An image scanner (1) comprising a transparent support bed (3) for supporting an object to be scanned, and a scanning device (5) arranged underneath the support bed, which scanning device comprises a movable element (7) comprising a light receiving member (8) configured to receive light and to transmit the light to an image sensor (9), and said image scanner comprising an image background device (15) that is arranged above the support bed (3) and arranged to provide an image background for the object during scanning, wherein the image background device (15) is arranged to perform a movement in coordination with a movement of the movable element (7).

2. The image scanner according to any one of the preceding claims, wherein the image background device (15) is movable in alignment with the movable element (7).

3. The image scanner according to any one of the preceding claims, wherein the image background device (15) is mechanically connected to the movable element (7).

4. The image scanner according to claim 3, wherein the image background device (15) is mechanically disconnectable from the movable element (7).

5. The image scanner according to any one of the preceding claims, wherein the image background device (15) is arranged to control the brightness of the image background.

6. The image scanner according to any one of the preceding claims, wherein the image background device (15) comprises an exchangeable background element (23).

7. The image scanner according to any one of the preceding claims, wherein the image background device (15) comprises a light reflecting element (21).

8. The image scanner according to any one of the preceding claims, wherein the image background device (15) comprises at least one light emitting element that directs light towards the moveable element (7) of the scanning device (5).

9. The image scanner according to any one of the preceding claims, wherein the image background device (15) is configured to block ingress of ambient light into the moveable element (7).

10. The image scanner according to any one of the preceding claims, wherein the image background device (15) comprises a first part (17) extending transversely to and essentially parallel to the support bed (3), which first part comprises a background forming surface (21) facing the movable element (7), and a second part (19) that mechanically connects the first part (17) with the movable element (7).

11. The image scanner according to any one of the preceding claims, wherein the image background device (15) is mechanically connected to the movable element (7) and wherein the image background device is configured to be mechanically disconnected from the movable element if the scanning device (5), during movement, encounters a physical obstacle.

12. The image scanner according to claim 11, wherein it comprises a sensor that detects mechanical disconnection of the image background device (15) and which sensor is arranged to send a signal to the scanning device (5) when disconnection has occurred, which signal indicates that the image is void.

13. The image scanner according to any one of claims 11-12, wherein the image background device (15) is configured to be mechanically reconnectable to the movable element (7), after having been disconnected.

14. The image scanner according to claim 13, wherein it comprises a sensor that detects reconnection of the image background device (15) and which sensor is arranged to send a signal to the scanning device (5) when reconnection has occurred, which signal indicates that the next image is to be accepted.

15. The image scanner according to any one of the preceding claims, wherein the image scanner is a contact image sensor (CIS) scanner.

16. A component feeder (30) comprising a transparent presentation surface (32) upon which components are presented in order to be pickable by a tool, and comprising an image scanner (1) according to any one of claims 1-15, wherein the presentation surface (32) comprises said support bed (3).
